# EUROPEAN PATENT APPLICATION

(11) **EP 4 822 937 A2**
(43) Date of publication of application: **14.10.2026**
(21) Application number: 26201439.2
(22) Date of filing: 26.05.2022
(51) Int. Cl.: H02J 3/32

(54) **ENERGY STORAGE SYSTEM**

(30) Priority: 18.02.2022 CN 202220337809 U
(62) Document number(s) of the earlier application(s) in accordance with Art. 76 EPC: 22753984.8 / 4 254 717
(71) Applicant: Contemporary Amperex Technology (Hong Kong) Limited, Central, Hong Kong (HK)
(72) Inventor: HUANG, Tianyi, Ningde, Fujian 352100 (CN); PAN, Xianxi, Ningde, Fujian 352100 (CN); GAO, Jinfeng, Ningde, Fujian 352100 (CN); CAI, Jinbo, Ningde, Fujian 352100 (CN)
(74) Representative: Lorenz Seidler Gossel Part. mbB

(57) **Abstract**

Embodiments of the present application provides an energy storage system (100), including: a first energy storage branch (110) including a first battery cluster (111); a second energy storage branch (120) including a second battery cluster (121) and a first DC/DC converter (122), an output end of the first DC/DC converter (122) being connected in series with the second battery cluster (121), and the first energy storage branch (110) being connected in parallel with the second energy storage branch (120); where the first DC/DC converter (122) is configured for adjusting an output current of the second energy storage branch (120), so that an output current of the first energy storage branch (110) and the output current of the second energy storage branch (120) are balanced. The energy storage system (100) provided by the embodiments of the present application may maximize capacity of the energy storage system (100). Two input ends of the first DC/DC converter are connected with a positive electrode and a negative electrode of the second battery cluster, respectively, so the second battery cluster is used to supply power to the first DC/DC converter, which may avoid introducing an additional power supply module, thereby lowering the volume and the cost of the energy storage system

## Description

This application is a continuation of International Application No. PCT/CN2022/095177, filed on May 26, 2022, which claims priority to Utility Model Application No. 202220337809.3, filed on February 18, 2022.

### TECHNICAL FIELD

The present application relates to the field of battery technologies, and in particular, to an energy storage system.

### BACKGROUND

In order to increase battery capacity, most energy storage systems are formed by directly connecting the same pole of battery clusters in parallel. Due to a small internal resistance of a battery, there is a large circulating current between battery clusters when connected in parallel. Exceeding a maximum withstand current of the battery may cause an irreversible damage to the battery, and current sharing between the battery clusters cannot be implemented during a charging and discharging process, thereby affecting capacity and efficiency of an energy storage system.

### SUMMARY

In view of this, embodiments of the present application provide an energy storage system, which may maximize capacity of the energy storage system.

In a first aspect, an energy storage system is provided, including: a first energy storage branch including a first battery cluster; a second energy storage branch including a second battery cluster and a first DC/DC converter, an output end of the first DC/DC converter being connected in series with the second battery cluster, and the first energy storage branch being connected in parallel with the second energy storage branch; where the first DC/DC converter is configured for adjusting an output current of the second energy storage branch, so that an output current of the first energy storage branch and the output current of the second energy storage branch are balanced.

In this embodiment, by adding the first DC/DC converter to the second energy storage branch to adjust the output current of the second energy storage branch, a balance between the output current of the first energy storage branch and the output current of the second energy storage branch may be implemented, capacity of the energy storage system then may be increased to the greatest extent.

In one possible implementation manner, the first energy storage branch does not include a DC/DC converter.

In this embodiment, by adding the first DC/DC converter to the second energy storage branch without adding the DC/DC converter to the first energy storage branch, the balance between the output current of the first energy storage branch and the output current of the second energy storage branch may be implemented, thereby lowering cost and volume of the energy storage system and reducing power loss of the energy storage system.

In one possible implementation manner, the output current of the first energy storage branch is adjusted by adjusting the output current of the second energy storage branch by the first DC/DC converter.

In this embodiment, by adding the first DC/DC converter to the second energy storage branch and adjusting a voltage of the second battery cluster through the first DC/DC converter, the output current of the second energy storage branch is adjusted, so that the output current of the first energy storage branch is also adjusted indirectly, so that the output current of the first energy storage branch and the output current of the second energy storage branch are balanced, that is, in general, the first energy storage branch and the second energy storage branch may complete discharging or charging at the same time, thereby increasing the capacity of the energy storage system to the greatest extent.

In one possible implementation manner, the second energy storage branch further includes: a first switch unit connected in parallel with the first DC/DC converter, and the first switch unit being configured for turning on or off the first DC/DC converter.

In this embodiment, by turning on or off the first DC/DC converter through the first switch unit, the output current of the second energy storage branch may be adjusted by the first DC/DC converter, which may further cause that the output current of the first energy storage branch and the output current of the second energy storage branch are balanced.

In one possible implementation manner, the first switch unit is further connected in series with the second battery cluster and configured for controlling operation of the second battery cluster.

In this embodiment, the same switch unit is used to control the operation of the second battery cluster and turn on or off the first DC/DC converter, which may reduce the number of switch units, thereby further lowering the cost of the energy storage system.

In one possible implementation manner, the first energy storage branch further includes: a second switch unit connected in series with the first battery cluster and configured for controlling operation of the first battery cluster.

In this embodiment, the second switch unit is used to control the operation of the first battery cluster, which may avoid a risk of overcharging or overdischarging the first battery cluster, thereby prolonging a battery life of the first battery cluster.

In one possible implementation manner, two input ends of the first DC/DC converter are connected with two ends of at least one battery in the second battery cluster, respectively.

In one possible implementation manner, the two input ends of the first DC/DC converter are connected with a positive electrode and a negative electrode of the second battery cluster, respectively.

In this embodiment, the second battery cluster is used to supply power to the first DC/DC converter, which may avoid introducing an additional power supply module, thereby lowering the volume and the cost of the energy storage system.

In one possible implementation manner, the first DC/DC converter is powered by a power supply independent of the energy storage system.

In one possible implementation manner, the energy storage system further includes: a main control unit configured for controlling the operation of the first DC/DC converter according to state information of the first battery cluster and state information of the second battery cluster.

In this embodiment, the main control unit may control the operation of the first DC/DC converter based on the state information of the first battery cluster and the state information of the second battery cluster, so that the output current of the second energy storage branch may be adjusted in time, thereby implementing the balance between the output current of the first energy storage branch and the output current of the second energy storage branch.

In one possible implementation manner, the energy storage system further includes: a first sub control unit configured for collecting the state information of the first battery cluster and transmitting it to the main control unit; a second sub control unit configured for collecting the state information of the second battery cluster and transmitting it to the main control unit.

In this embodiment, by assigning one sub control unit to each energy storage branch, and collecting the state information of the battery clusters on the corresponding energy storage branches by the sub control unit, burden and power consumption of the main control unit may be reduced.

In one possible implementation manner, the energy storage system further includes: a power conversion unit configured for providing the main control unit with a total demand power of the energy storage system; the main control unit configured for controlling the operation of the first DC/DC converter according to the total demand power, the state information of the first battery cluster and the state information of the second battery cluster.

In this embodiment, the voltage of the second battery cluster in the second energy storage branch is adjusted by the first DC/DC converter, so that the output current of the second energy storage branch may be adjusted, and at a given total demand power, the output current of the first energy storage branch is also adjusted, so that the first battery cluster and the second battery cluster complete discharging or charging at the same time in general, which increases the capacity of the energy storage system to the greatest extent.

In one possible implementation manner, the energy storage system further includes: the first sub control unit configured for collecting the state information of the first battery cluster; the second sub control unit configured for collecting the state information of the second battery cluster and receiving the state information of the first battery cluster transmitted by the first sub control unit; the second sub control unit further configured for controlling the operation of the first DC/DC converter according to the state information of the first battery cluster and the state information of the second battery cluster.

In one possible implementation manner, the switch unit is a relay.

In one possible implementation manner, the first DC/DC converter is an isolated DC/DC converter.

In one possible implementation manner, the first DC/DC converter is a non-isolated DC/DC converter.

In one possible implementation manner, the first battery cluster is formed by a plurality of batteries in series and/or in parallel.

In one possible implementation manner, the second battery cluster is formed by a plurality of batteries in series and/or in parallel.

In one possible implementation manner, the power conversion unit is an AC/DC converter or a second DC/DC converter.

In one possible implementation manner, the output end of the first DC/DC converter is connected in series with the positive electrode and the negative electrode of the second battery cluster.

### BRIEF DESCRIPTION OF DRAWINGS

To describe technical solutions in embodiments of the present application more clearly, the following briefly introduces accompanying drawings required for describing the embodiments of the present application. Apparently, the accompanying drawings in the following description show merely some embodiments of the present application, and those of ordinary skill in the art may still derive other drawings from these accompanying drawings without creative efforts.
FIG. 1 shows a schematic block diagram of an energy storage system according to an embodiment of the present application.
FIG. 2 shows a schematic structural diagram of an energy storage system according to an embodiment of the present application.
FIG. 3 shows another schematic structural diagram of an energy storage system according to an embodiment of the present application.
FIG. 4 shows a schematic structural diagram of a first battery cluster according to an embodiment of the present application.
FIG. 5 shows a schematic structural diagram of a second battery cluster according to an embodiment of the present application.

### DESCRIPTION OF EMBODIMENTS

Technical solutions in embodiments of the present application shall be clearly and completely described below with reference to the accompanying drawings in the embodiments of the present application. Apparently, the described embodiments are merely some of, rather than all of, the embodiments of the present application. All other embodiments obtained by those of ordinary skill in the art based on the embodiments of the present application without creative efforts shall fall within the protection scope of the present application.

Unless otherwise defined, all technical and scientific terms used in the present application have the same meanings as those commonly understood by those skilled in the art to which the present application belongs. The terms used in the specification of the present application are merely for the purpose of describing specific embodiments, but are not intended to limit the present application. The terms "including" and "having" and any variations thereof in the specification and the claims of the present application as well as the foregoing description of the accompanying drawings are intended to cover non-exclusive inclusions. The terms "first", "second" and the like in the specification and the claims of the present application as well as the above drawings are used to distinguish different objects, rather than to describe a specific order or primary-secondary relationship.

The phrase "embodiments" referred to in the present application means that the descriptions of specific features, structures, and characteristics in combination with the embodiments are included in at least an embodiment of the present application. The phrase at various locations in the specification does not necessarily refer to the same embodiment, or an independent or alternative embodiment exclusive of another embodiment. Those skilled in the art understand, in explicit and implicit manners, that an embodiment described in the present application may be combined with another embodiment.

In the description of the present application, it should be noted that unless otherwise explicitly specified and defined, the terms "connecting" and "connection" may be a direct connection and may also be an indirect connection through an intermediate medium, or may be communication between the interiors of two elements. Those of ordinary skill in the art may appreciate the specific meanings of the foregoing terms in the present application according to specific circumstances.

The term "and/or" in the present application describes only an association relationship for describing associated objects and represents that three relationships may exist. For example, A and/or B may represent the following three cases: only A exists, both A and B exist, and only B exists. In addition, the character "/" in the present application generally indicates that the associated objects before and after the character are in an "or" relation.

A battery cluster in the present application refers to a battery assembly connected by batteries in series, parallel or mixed connection, where the mixed connection refers to a mixture of series and parallel connection. For example, the battery cluster in the present application may be formed by a plurality of batteries in series or in parallel. For another example, the battery cluster in the present application may be formed by connecting the plurality of batteries in parallel and then in series. A battery refers to a single physical module including one or more battery cells to provide a higher voltage and/or capacity. For example, the battery may be a battery module or a battery pack.

It should be understood that the battery in the embodiments of the present application may be a lithium-ion battery, a lithium metal battery, a lead-acid battery, a nickel separator battery, a nickel hydrogen battery, a lithium sulfur battery, a lithium air battery or a sodium ion battery, which is not limited here.

At present, in most energy storage systems, it is necessary to increase system capacity by connecting battery clusters in parallel. When the battery clusters are directly connected in parallel, there shall be a phenomenon of circulating current after charging and discharging, and voltages of each battery cluster shall be forced to balance. When the battery cluster with a small internal resistance is fully charged or discharged, other battery clusters must stop charging and discharging, resulting in insufficient charging and discharging of other battery clusters, further resulting in capacity loss and temperature rise of the battery, accelerating battery attenuation and reducing available capacity of the energy storage system.

In view of this, the embodiments of the present application provide an energy storage system, including a first energy storage branch and a second energy storage branch, by adding a direct current-direct current (direct current-direct current, DC/DC) converter to the second energy storage branch to adjust an output current of the second energy storage branch, so that an output current of the first energy storage branch and the output current of the second energy storage branch are balanced, thereby increasing the capacity of the energy storage system to the largest extent.

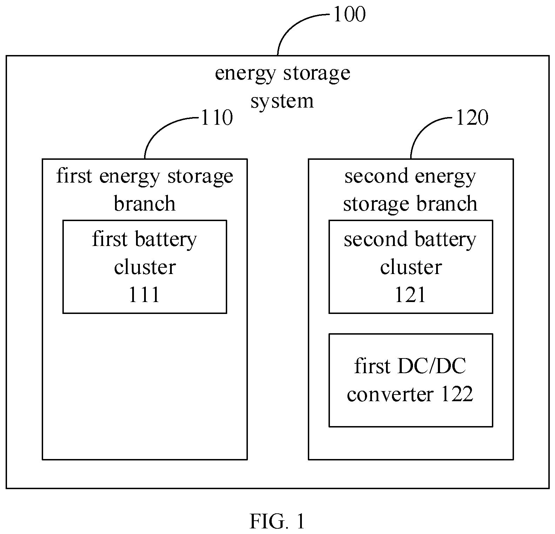

FIG. 1 shows a schematic block diagram of an energy storage system according to an embodiment of the present application. As shown in FIG. 1, the energy storage system 100 includes a first energy storage branch 110 and a second energy storage branch 120, and the first energy storage branch 110 and the second energy storage branch 120 are connected in parallel. The first energy storage branch 110 includes a first battery cluster 111, the second energy storage branch 120 includes a second battery cluster 121 and a first DC/DC converter 122, and an output end of the first DC/DC converter 122 is connected in series with the second battery cluster 121. Where the first DC/DC converter 122 is configured for adjusting an output current of the second energy storage branch 120, so that an output current of the first energy storage branch 110 and the output current of the second energy storage branch 120 are balanced.

In an embodiment, the first energy storage branch 110 does not include a DC/DC converter. That is, the first energy storage branch 110 does not include the DC/DC converter configured for directly adjusting the output current of the first energy storage branch 110.

In another embodiment, the output current of the first energy storage branch 110 is adjusted by adjusting the output current of the second energy storage branch 120 by the first DC/DC converter 122. That is, the output current of the first energy storage branch 110 is indirectly adjusted by the first DC/DC converter 122.

In other embodiments, other devices capable of adjusting the output current of the first energy storage branch 110 may also be added to the first energy storage branch 110, for example, a sliding resistor, which is not limited in this embodiment of the present application. Except for the DC/DC converter, as long as the devices can implement adjusting the output current of the first energy storage branch 110 are within the protection scope of the technical solution of the present application.

It should be noted that the first energy storage branch 110 and the second energy storage branch 120 in the embodiment of the present application do not represent the number of energy storage branches included in the energy storage system 100, but represent the type of energy storage branches included in the energy storage system 100, where one type represents that the energy storage branch does not include the DC/DC converter, and the other type represents that the energy storage branch includes the DC/DC converter. That is, the energy storage system 100 may include at least one first energy storage branch 110 and at least one second energy storage branch 120.

Since the DC/DC converter is a voltage converter that converts an input voltage and effectively outputs a fixed voltage, in the embodiment of the present application, by adding the first DC/DC converter 122 to the second energy storage branch 120 and adjusting a voltage of the second battery cluster 121 by the first DC/DC converter 122, the output current of the second energy storage branch 120 is adjusted, so that the output current of the first energy storage branch 110 is also indirectly adjusted, so as to cause that the output current of the first energy storage branch 110 and the output current of the second energy storage branch 120 are balanced, that is, in general, the first energy storage branch 110 and the second energy storage branch 120 may complete discharging or charging at the same time, thereby increasing the capacity of the energy storage system 100 to the largest extent.

In addition, by adding the first DC/DC converter 122 to the second energy storage branch 120 without adding the DC/DC converter to the first energy storage branch 110, a balance between the output current of the first energy storage branch 110 and the output current of the second energy storage branch 120 may be achieved, thereby lowering cost and volume of the energy storage system 100 and reducing power loss of the energy storage system 100.

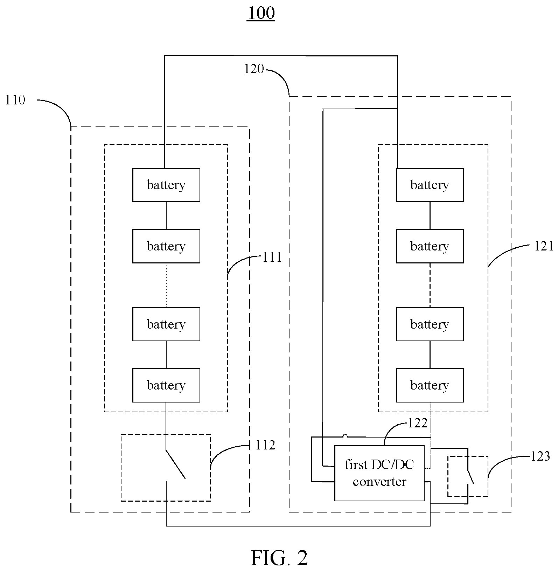

FIG. 2 shows a schematic structural diagram of an energy storage system 100 according to an embodiment of the present application.

Optionally, as shown in FIG. 2, the second energy storage branch 120 further includes a first switch unit 123, the first switch unit 123 is connected in parallel with a first DC/DC converter 122, and the first switch unit 123 is configured for turning on or off the first DC/DC converter 122. For example, when the first DC/DC converter 122 is required to adjust an output current of a second energy storage branch 120, the first switch unit 123 is turned off, and when the first DC/DC converter 122 is not required to adjust the output current of the second energy storage branch 120, the first switch unit 123 is turned on.

In this embodiment, by turning on or off the first DC/DC converter through the first switch unit 123, the output current of the second energy storage branch 120 may be adjusted by the first DC/DC converter 122, which may further cause that an output current of the first energy storage branch 110 and the output current of the second energy storage branch 120 are balanced.

Optionally, as shown in FIG. 2, the first switch unit 123 is further connected in series with a second battery cluster 121, and the first switch unit 123 is further configured for controlling operation of the second battery cluster 121. For example, during a discharging process, if the second battery cluster 121 has reached a discharging cut-off voltage, the first switch unit 123 is turned off, so that the second battery cluster 121 stops the operation, and if the second battery cluster 121 has not reached the discharging cut-off voltage, the first switch unit 123 is continuously turned on, so that the second battery cluster 121 continues to operate.

In this embodiment, the same switch unit is configured for controlling the operation of the second battery cluster 121 and turning on or off the first DC/DC converter 122, which may reduce the number of switch units, thereby further lowering the cost of the energy storage system 100.

Optionally, as shown in FIG. 2, the first energy storage branch 110 further includes: a second switch unit 112 connected in series with a first battery cluster 111, and the second switch unit 112 is configured for controlling the operation of the first battery cluster 111. For example, during the discharging process, if the first battery cluster 111 has reached the discharging cut-off voltage, the second switch unit 112 is turned off, so that the first battery cluster 111 stops the operation, and if the first battery cluster 111 has not reached the discharging cut-off voltage, the second switch unit 112 is continuously turned on, so that the first battery cluster 111 continues to operate.

In this embodiment, the second switch unit 112 is configured for controlling the operation of the first battery cluster 111, which may avoid a risk of overcharging or over-discharging the first battery cluster 111, thereby prolonging a battery life of the first battery cluster 111.

Optionally, in an embodiment, two input ends of the first DC/DC converter 122 may be connected with two ends of at least one battery in the second battery cluster 121. Further, the two input ends of the first DC/DC converter 122 are connected with a positive electrode and a negative electrode of the second battery cluster 121, respectively.

In this embodiment, the second battery cluster 121 is configured for supplying power to the first DC/DC converter 122, which may avoid introducing an additional power supply module, thereby lowering volume and cost of the energy storage system 100.

Optionally, in another embodiment, the first DC/DC converter 122 is powered by a power supply independent of the energy storage system 100. For example, the first DC/DC converter 122 is powered by a separate battery. For another example, the first DC/DC converter 122 is powered by an independent capacitor.

It should be noted that, whether it is a low voltage power supply or a high voltage power supply of the first DC/DC converter 122, any one of the above various embodiments may be used.

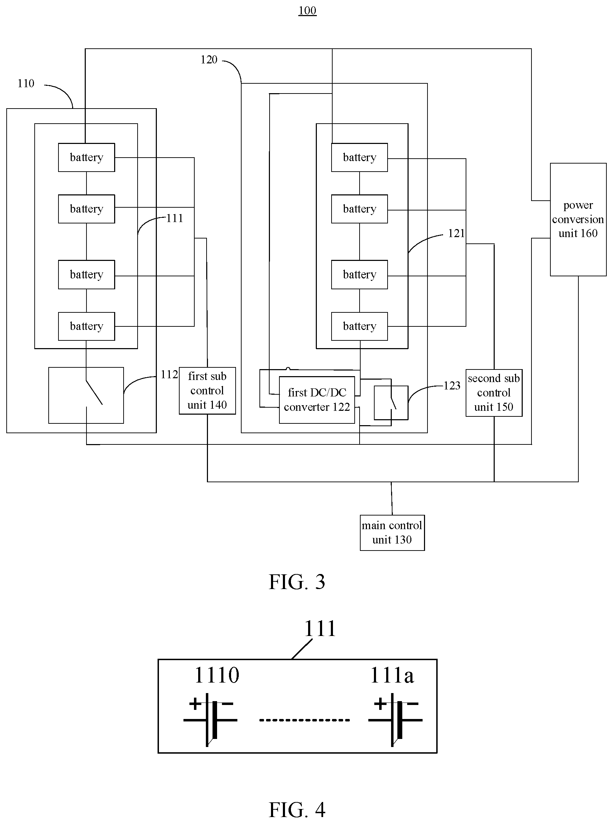

FIG. 3 shows another schematic structural diagram of an energy storage system 100 according to an embodiment of the present application.

As shown in FIG. 3, the energy storage system 100 further includes: a main control unit 130 configured for controlling operation of a first DC/DC converter 122 according to state information of a first battery cluster 111 and state information of a second battery cluster 121.

Optionally, the state information of the first battery cluster 111 and the second battery cluster 121 may include various parameters such as voltage, current, temperature, and SOC of a battery cluster. The state information of the first battery cluster 111 may be overall state information of the first battery cluster 111, or may be state information of each battery in the first battery cluster 111. Likewise, the state information of the second battery cluster 121 may be overall state information of the second battery cluster 121, or may be state information of each battery in the second battery cluster 121.

Optionally, the main control unit 130 may control the first DC/DC converter 122 to be turned on or off based on the state information of the first battery cluster 111 and the state information of the second battery cluster 121. For example, the main control unit 130 controls the first switch unit 123 to be turned on or off based on the state information of the first battery cluster 111 and the state information of the second battery cluster 121, thereby controlling the first DC/DC converter 122 to be turned on or off.

In another embodiment, if a main operation mode of the first DC/DC converter 122 is a pulse width modulation (pulse width modulation, PWM) mode, the main control unit 130 may adjust a duty cycle of a pulse wave based on the state information of the first battery cluster 111 and the state information of the second battery cluster 121, thereby adjusting an output voltage of the first DC/DC converter 122, and then adjusting an output current of the second energy storage branch 120.

In another embodiment, if the main operation mode of the first DC/DC converter 122 is the pulse frequency modulation (pulse frequency modulation, PFM) mode, the main control unit 130 may adjust an output frequency of the pulse wave based on the state information of the first battery cluster 111 and the state information of the second battery cluster 121, thereby adjusting the output voltage of the first DC/DC converter 122, and then adjusting the output current of the second energy storage branch 120.

All in all, in this embodiment, the main control unit 130 may control operation of the first DC/DC converter 122 based on the state information of the first battery cluster 111 and the state information of the second battery cluster 121, so that an output current of a second energy storage branch 120 may be adjusted in time, so as to cause that an output current of a first energy storage branch 110 and the output current of the second energy storage branch 120 are balanced.

Optionally, as shown in FIG. 3, the energy storage system 100 further includes: a first sub control unit 140 and a second sub control unit 150. The first sub control unit 140 is configured for collecting the state information of the first battery cluster 111 and transmitting the collected state information of the first battery cluster 111 to the main control unit 130, and the second sub control unit 150 is configured for collecting the state information of the second battery cluster 121 and transmitting the collected state information of the second battery cluster 121 to the main control unit 130.

It should be noted that the first sub control unit 140 may collect the state information of each battery in the first battery cluster 111, the second sub control unit 150 may collect the state information of each battery in the second battery cluster 121, the first sub control unit 140 may transmit the state information of each battery of the first battery cluster 111 to the main control unit 130, and the first sub control unit 140 may also transmit overall state information of the first battery cluster 111 to the main control unit 130. Likewise, the second sub control unit 150 may transmit the state information of each battery of the second battery cluster 121 to the main control unit 130, and the second sub control unit 150 may also transmit overall state information of the second battery cluster 121 to the main control unit 130.

In this embodiment, by assigning one sub control unit to each energy storage branch, and collecting the state information of battery clusters on the corresponding energy storage branches by the sub control unit, burden and power consumption of the main control unit may be reduced.

In another embodiment, as shown in FIG. 3, the energy storage system 100 further includes: a first sub control unit 140 configured for collecting the state information of the first battery cluster 111; a second sub control unit 150 configured for collecting the state information of the second battery cluster 121 and receiving the state information of the first battery cluster 111 transmitted by the first sub control unit 140; the second sub control unit 150 further configured for controlling the operation of the first DC/DC converter 122 according to state information of the first battery cluster 111 and state information of the second battery cluster 121.

That is, controlling the operation of the first DC/DC converter 122 may be performed by the second sub control unit 150 without the main control unit 130, thereby further lowering the power consumption of the main control unit 130.

In other embodiments, controlling the operation of the first DC/DC converter 122 may be performed by a control unit integrated inside the first DC/DC converter 122. And the embodiment of the present application does not limit subject that controls the operation of the first DC/DC converter 122.

Optionally, as shown in FIG. 3, the energy storage system 100 further includes: a power conversion unit 160 configured for providing the main control unit 130 with a total demand power of the energy storage system 100. The main control unit 130 controls the operation of the first DC/DC converter 122 according to the total demand power, the state information of the first battery cluster 111 and the state information of the second battery cluster 121.

Generally, the power conversion unit 160 is configured for converting a power type output by the energy storage system 100 into a power type required by a load. For example, the power conversion unit 160 may convert a direct current power output by the energy storage system 100 into an alternating current power. For another example, the power conversion unit 160 may change voltage value, current value or timing of voltage and current output by the energy storage system 100.

In this embodiment, a voltage of the second battery cluster 121 in the second energy storage branch 120 is adjusted by the first DC/DC converter 122, so that the output current of the second energy storage branch 120 may be adjusted, and at a given total demand power, the output current of the first energy storage branch 110 is also adjusted, so that the first battery cluster 111 and the second battery cluster 121 complete discharging and charging at the same time in general, which increase capacity of the energy storage system 100 to the largest extent.

Optionally, the power conversion unit 160 may be an alternating current-direct current (alternating current-direct current, AC/DC) converter or a second DC/DC converter.

Optionally, in other embodiments of the present application, the power conversion unit 160 may also directly provide the total demand power of the energy storage system 100 to the second sub control unit 150. The second sub control unit 150 controls the operation of the first DC/DC converter 122 according to the total demand power, the state information of the first battery cluster 111 and the state information of the second battery cluster 121.

Optionally, in the whole energy storage system 100, the main control unit 130, the first sub control unit 140, the second sub control unit 150, the power conversion unit 160 and the first DC/DC converter 122 may communicate on the same network.

Optionally, the main control unit 130 may also control states of the first switch unit 123 and the second switch unit 112.

Optionally, in the embodiment of the present application, the first switch unit 123 and the second switch unit 112 may be relays.

In this embodiment, by adopting the relays, the operation of the first battery cluster 111 and the operation of the second battery cluster 121 may be controlled more safely and conveniently.

Optionally, in an embodiment of the present application, the first DC/DC converter 122 may be an isolated DC/DC converter.

Optionally, in another embodiment of the present application, the first DC/DC converter 122 may be a non-isolated DC/DC converter.

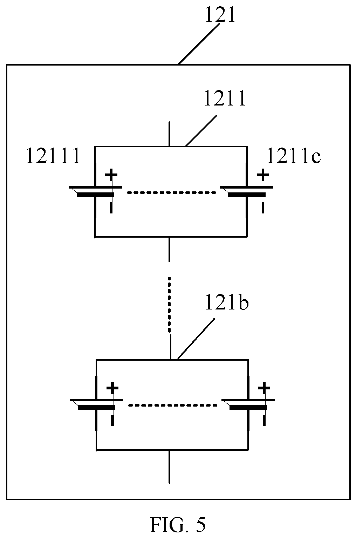

Optionally, in an embodiment of the present application, the first battery cluster 111 may be formed by a plurality of batteries in series and/or in parallel, and the second battery cluster 121 may also be formed by a plurality of batteries in series and/or parallel. For example, the first battery cluster 111 is formed by a plurality of batteries in series, and the second battery cluster 121 is formed by a plurality of batteries in an order of being connected in parallel and then connected in series. As shown in FIG. 4, the first battery cluster 111 is formed by batteries 1110-111a in series. As shown in FIG. 5, the second battery cluster 121 is formed by battery packs 1211-121b in series, and a battery pack 1211 is formed by batteries 12111-1211c in parallel. Where the number of batteries included in each of the battery packs 1211-121b may be the same or different, which is not limited by the embodiment of the application.

Optionally, in the embodiment of the present application, the first DC/DC converter 122 may be connected in series to any position of the second energy storage branch 120. For example, as shown in FIG. 2 or FIG. 3, the output end of the first DC/DC converter 122 is connected in series with the positive electrode or the negative electrode of the second battery cluster 121. Alternatively, the first DC/DC converter 122 is connected in series between any two batteries in the second battery cluster 121.

Optionally, the energy storage system 100 in the embodiment of the present application may be applied to a direct current supplementation scenario or a battery cluster failure replacement scenario. As a service life of a product increases, battery capacity in the energy storage system decreases. In order to meet power output requirements, the energy storage system needs to be supplemented. The most desired way to supplement the energy storage system is a direct current supplementation. The so-called direct current supplementation refers to supplementing capacity of the energy storage system with a battery cluster as the smallest unit. Whether it is the direct current supplementation scenario or the battery cluster failure replacement scenario, there are differences between old and new battery clusters. For example, due to large differences in capacity, internal resistance and other factors of the old and new battery clusters, state of charge (state of charge, SOC) between the newly supplemented battery cluster and the old battery cluster is different. In addition, the ambient temperature of each battery cluster cannot be completely consistent when it actually operates, problems such as the SOC and cluster voltage mismatch inevitably occur when the old and new battery clusters are used together. For example, during a discharging process, a battery with the smallest SOC in the old battery cluster first discharges power due to its least power, reaches a discharging cut-off voltage in advance, and then stopes operation of the cluster, which will cause the energy storage system to fail to discharge at full power continuously for a given time, greatly reducing constant power operation capacity of the energy storage system. At the same time, the capacity of the newly supplemented battery cluster has not been fully released, resulting in a poor supplement benefit.

However, in the energy storage system provided by the embodiment of the present application, the first DC/DC converter 122 is added to the newly supplemented energy storage branch (that is, the second energy storage branch 120), and the output current of the newly supplemented energy storage branch is adjusted by the first DC/DC converter 122, so that the first battery cluster 111 and the second battery cluster 121 with different capacities may complete charging or discharging at the same time, and the capacity of the energy storage system may be maximized, thereby improving the benefit after supplementation, and effectively alleviating an impact of a battery short board effect in the direct current supplementation scenario or the failure replacement scenarios.

In addition, only adding the DC/DC converter to the newly supplemented energy storage branch may be compatible with the old energy storage system, thereby lowering the cost of the energy storage system and saving space of an electrical cabinet.

In the energy storage system provided by the embodiment of the present application, the number of newly supplemented energy storage branches may be one or more, and the number of old energy storage branches may also be one or more, and the newly supplemented energy storage branch corresponds to the second energy storage branch 120 in the above energy storage system 100, and the old energy storage branch corresponds to the first energy storage branch 110 in the above energy storage system 100.

Those of ordinary skill in the art may realize that the units and algorithm steps of each example described in combination with the embodiments disclosed herein may be implemented in electronic hardware, or a combination of computer software and electronic hardware. Whether these functions are performed in hardware or software depends on specific applications and design constraints of the technical solutions. Skilled artisans may implement the described functions using different methods for each particular application, but such implementation should not be understood beyond the scope of the present application.

In several embodiments provided by the present application, it should be understood that, the disclosed system, apparatus and method may be implemented in other manners. For example, the above described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual coupling or direct coupling or communication connection may be indirect coupling or communication connection through some interfaces, apparatuses or units, and may also be electrical, mechanical, or other forms.

The units described as separate parts may be or may not be separated physically, and a component displayed as a unit may be or may not be a physical unit, namely, may be located in one place, or may be distributed on a plurality of network units. Part of or all of the units here may be selected according to a practical need to achieve the objectives of the solutions of the embodiments of the present application.

As has become apparent from the above description, the present invention relates to the following aspects:
1. An energy storage system, comprising:
   a first energy storage branch comprising a first battery cluster;
   a second energy storage branch comprising a second battery cluster and a first DC/DC converter, an output end of the first DC/DC converter being connected in series with the second battery cluster, and the first energy storage branch being connected in parallel with the second energy storage branch;
   wherein the first DC/DC converter is configured for adjusting an output current of the second energy storage branch, so that an output current of the first energy storage branch and the output current of the second energy storage branch are balanced.
2. The energy storage system according to aspect 1, wherein the first energy storage branch does not comprise a DC/DC converter.
3. The energy storage system according to aspect 1, wherein the output current of the first energy storage branch is adjusted by adjusting the output current of the second energy storage branch by the first DC/DC converter.
4. The energy storage system according to aspect 1, wherein the second energy storage branch further comprises:
   a first switch unit connected in parallel with the first DC/DC converter, and the first switch unit being configured for turning on or off the first DC/DC converter.
5. The energy storage system according to aspect 4, wherein the first switch unit is further connected in series with the second battery cluster and configured for controlling operation of the second battery cluster.
6. The energy storage system according to aspect 1, wherein the first energy storage branch further comprises:
   a second switch unit connected in series with the first battery cluster and configured for controlling operation of the first battery cluster.
7. The energy storage system according to aspect 1, wherein two input ends of the first DC/DC converter are connected with two ends of at least one battery in the second battery cluster, respectively.
8. The energy storage system according to aspect 7, wherein the two input ends of the first DC/DC converter are connected with a positive electrode and a negative electrode of the second battery cluster, respectively.
9. The energy storage system according to aspect 1, wherein the first DC/DC converter is powered by a power supply independent of the energy storage system.
10. The energy storage system according to aspect 1, wherein the energy storage system further comprises:
   a main control unit configured for controlling the operation of the first DC/DC converter according to state information of the first battery cluster and state information of the second battery cluster.
11. The energy storage system according to aspect 10, wherein the energy storage system further comprises:
   a first sub control unit configured for collecting the state information of the first battery cluster and transmitting it to the main control unit;
   a second sub control unit configured for collecting the state information of the second battery cluster and transmitting it to the main control unit.
12. The energy storage system according to aspect 10 or 11, wherein the energy storage system further comprises:
   a power conversion unit configured for providing the main control unit with a total demand power of the energy storage system;
   the main control unit configured for controlling the operation of the first DC/DC converter according to the total demand power, the state information of the first battery cluster and the state information of the second battery cluster.
13. The energy storage system according to aspect 1, wherein the energy storage system further comprises:
   a first sub control unit configured for collecting state information of the first battery cluster;
   a second sub control unit configured for collecting state information of the second battery cluster and receiving the state information of the first battery cluster transmitted by the first sub control unit;
   the second sub control unit further configured for controlling the operation of the first DC/DC converter according to the state information of the first battery cluster and the state information of the second battery cluster.
14. The energy storage system according to any one of aspects 4 to 6, wherein the switch unit is a relay.
15.The energy storage system according to aspect 1, wherein the first DC/DC converter is an isolated DC/DC converter.
16. The energy storage system according to aspect 1, wherein the first DC/DC converter is a non-isolated DC/DC converter.
17. The energy storage system according to aspect 1, wherein the first battery cluster is formed by a plurality of batteries in series and/or in parallel.
18. The energy storage system according to aspect 1, wherein the second battery cluster is formed by a plurality of batteries in series and/or in parallel.
19. The energy storage system according to aspect 12, wherein the power conversion unit is an AC/DC converter or a second DC/DC converter.
20. The energy storage system according to aspect 1, wherein the output end of the first DC/DC converter is connected in series with a positive electrode or a negative electrode of the second battery cluster.

## Claims

1. An energy storage system (100), comprising:
a first energy storage branch (110) comprising a first battery cluster (111);
a second energy storage branch (120) comprising a second battery cluster (121) and a first DC/DC converter (122), an output end of the first DC/DC converter being connected in series with the second battery cluster (121), and the first energy storage branch (110) being connected in parallel with the second energy storage branch (120);
wherein the first DC/DC converter (122) is configured for adjusting an output current of the second energy storage branch (120), so that an output current of the first energy storage branch (110) and the output current of the second energy storage branch (120) are balanced,
wherein two input ends of the first DC/DC converter (122) are connected with a positive electrode and a negative electrode of the second battery cluster (121), respectively, such that the second battery cluster (121) is configured to supply operating power to the first DC/DC converter (122).

2. The energy storage system (100) according to claim 1, wherein the first energy storage branch (1010) does not comprise a DC/DC converter, wherein the output current of the first energy storage branch (110) is adjusted by adjusting the output current of the second energy storage branch (120) by the first DC/DC converter.

3. The energy storage system (100) according to any one of the previous claims, wherein the second energy storage branch (120) further comprises:
a first switch unit (123) connected in parallel with the first DC/DC converter (122), and the first switch unit (123) being configured for turning on or off the first DC/DC converter (122), wherein the first switch unit (123) is further connected in series with the second battery cluster (121) and configured for controlling operation of the second battery cluster (120).

4. The energy storage system according to the preceeding claim, wherein the first switch unit (123) is configured to:
• bypass the first DC/DC converter (122) when the first switch unit (123) is turned on to short-circuit the first DC/DC converter (122), and
• control the connection of the second battery cluster (121) to turn off the second energy storage branch (120) when the second battery cluster (121) reaches a discharging or charging cut-off voltage

5. The energy storage system (100) according to any one of the previous claims, wherein the first energy storage branch (110) further comprises:
a second switch unit (112) connected in series with the first battery cluster (111) and configured for controlling operation of the first battery cluster (111).

6. The energy storage system (100) according to any one of the previous claims, wherein the energy storage system (100) further comprises:
a main control unit (130) configured for controlling the operation of the first DC/DC converter (122) according to state information of the first battery cluster (111) and state information of the second battery cluster (121), optionally the energy storage system (100) further comprises:
a first sub control unit (140) configured for collecting the state information of the first battery cluster (111) and transmitting it to the main control unit (130);
a second sub control unit (150) configured for collecting the state information of the second battery cluster (121) and transmitting it to the main control unit (130).

7. The energy storage system (100) according to claim 6, wherein the energy storage system (100) further comprises:
a power conversion unit (160) configured for providing the main control unit (130) with a total demand power of the energy storage system (100);
the main control unit (130) configured for controlling the operation of the first DC/DC converter (122) according to the total demand power, the state information of the first battery cluster (111) and the state information of the second battery cluster (121); and optionally the power conversion unit (160) is an AC/DC converter or a second DC/DC converter.

8. The energy storage system (100) according to any one of the previous claims, wherein the energy storage system (100) further comprises:
a first sub control unit (140) configured for collecting state information of the first battery cluster (111);
a second sub control unit (150) configured for collecting state information of the second battery cluster (121) and receiving the state information of the first battery cluster (111) transmitted by the first sub control unit (140);
the second sub control unit (150) further configured for controlling the operation of the first DC/DC converter (122) according to the state information of the first battery cluster (111) and the state information of the second battery cluster (121).

9. The energy storage system (100) according to anyone of claims 3 to 5, wherein the switch unit is a relay.

10. The energy storage system (100) according to any one of the previous claims, wherein the first DC/DC converter (122) is an isolated DC/DC converter, or the first DC/DC converter (122) is a non-isolated DC/DC converter.

11. The energy storage system (100) according to any one of the previous claims, wherein the first battery cluster (111) is formed by a plurality of batteries in series and/or in parallel.

12. The energy storage system (100) according to any one of the previous claims, wherein the second battery cluster (121) is formed by a plurality of batteries in series and/or in parallel.

13. The energy storage system (100) according to any one of the previous claims, wherein the output end of the first DC/DC converter (122) is connected in series with a positive electrode or a negative electrode of the second battery cluster (121).
